# EUROPÄISCHE PATENTANMELDUNG

(11) **EP 3 153 013 A1**
(43) Veröffentlichungstag der Anmeldung: **12.04.2017**
(21) Anmeldenummer: 16191032.8
(22) Anmeldetag: 28.09.2016
(51) Int. Cl.: A01G 9/02

(54) **MODULARES SYSTEM FÜR LEBENDE WAND**

(30) Priorität: 06.10.2015 EP 15188521
(71) Anmelder: Kawneer Aluminium Deutschland Inc., 58642 Iserlohn (DE)
(72) Erfinder: Dobigny, Grégoire, 68540 Bollwiller (FR)
(74) Vertreter: Trinks, Ole

(57) **Zusammenfassung**

Die Erfindung betrifft ein modulares System für eine lebende Wand, wobei das System ein Frontelement (1) aufweist mit mindestens einem Substratbehälter (2). Weiterhin weist das System ein Rückelement (9) auf mit mindestens einer integrierten Bewässerungsleitung (10), wobei das Rückelement (9) mit dem Frontelement (1) verbindbar ist. Schließlich ist eine Zwischenschicht (7) vorgesehen, welche zwischen dem Frontelement (1) und dem Rückelement (9) angeordnet ist, und welche für Substrat, insbesondere Erde, im Wesentlichen undurchlässig ist.

## Beschreibung

Die Erfindung betrifft ein modulares System für eine lebende Wand, wobei das System ein Frontelement mit mindestens einem Substratbehälter aufweist. Das System weist weiterhin ein Rückelement auf, welches mit dem Frontelement verbindbar ist.

Bekannte Systeme für lebende Wände weisen Frontelemente auf, die mindestens einen Substratbehälter beinhalten. Die Substratbehälter sind ausgelegt, mit Erde befüllt zu werden, wobei hierauf folgend diverse Pflanzen in die Erde eingesetzt werden können, die in den Substratbehältern gedeihen können.

Der Begriff "lebende Wand" bezeichnet ein System, bei dem eine Wand, beispielsweise eine Gebäudefassade, mit Pflanzen versehen wird derart, dass von einem sichtseitigen Bereich die Wand zumindest zum Teil von Pflanzenwuchs bedeckt wird.

Zur Bewässerung der Pflanzen sind verschiedene Systeme bekannt, beispielsweise können Substratbehälter im oberen Bereich Schlitze oder Leitungen aufweisen, durch die Wasser von oben auf die Pflanzen herabregnen kann. Verschiedene Frontelemente bzw. verschiedene Substratbehälter können nebeneinander und übereinander angeordnet werden, so dass Wasser durch die verschiedenen Substratbehälter bzw. Frontelemente hinab tropfen kann.

Darüber hinaus ist bekannt, die Frontelemente mit Rückelementen zu verbinden, wobei die Rückelemente an einer Tragstruktur befestigt werden können, die zum Beispiel an einer Gebäudefassade angeordnet ist. Die Tragstruktur kann zu diesem Zweck ein Gestänge oder Ähnliches aufweisen, an dem die Frontelemente bzw. die Rückelemente aufgehangen oder befestigt werden können.

Üblicherweise werden mehrere Frontelemente bzw. Substratbehälter an einer Gebäudefassade angeordnet, um die Gebäudefassade flächig mit den Frontelementen zu bedecken. Hierdurch soll der Effekt erzielt werden, dass große Teile der Gebäudefassade vollständig von Pflanzenbewuchs bedeckt sind.

Bekannte Systeme weisen die Nachteile auf, dass die Bewässerung der Substratbehälter aufwendig ist, da die Gesamtheit der Substratbehälter mit Wasser und Nährstoffen versorgt werden muss. Hierbei werden bei bekannten Systemen die Substratbehälter bzw. die Frontelemente an der Gebäudefassade angeordnet und anschließend ein Bewässerungssystem angebracht. Das Bewässerungssystem muss an die genauen Gegebenheiten angepasst und somit individuell für jedes System eingestellt werden.

Da als Bewässerungssystem üblicherweise ein System zum Einsatz kommt, bei dem Wasser von oben in die Substratbehälter eingegeben wird und durch die Substratbehälter weiter nach unten rieselt, kann das Bewässerungssystem nur für das komplette System eingerichtet werden. Auch bei einem Bewässerungssystem, bei dem ein Schlauch durch oder angrenzend zu den Substratbehältern verläuft und diese mit Wasser und Nährstoffen versorgt, muss das Bewässerungssystem für das komplette System zur Verfügung gestellt werden.

Wenn einzelne Frontelemente bzw. Substratbehälter entfernt werden, muss das Bewässerungssystem modifiziert werden, um zu verhindern, dass das Bewässerungssystem unterbrochen wird oder optisch unansehnlich wird (bei einem Schlauch, der durch oder angrenzend zu den Substratbehältern verläuft) oder die Bewässerungsleistung nicht mehr der Bepflanzung entspricht (falls die Bewässerung von oben erfolgt).

Darüber hinaus sind bekannte Systeme schwer, so dass das Installieren und/oder Abbauen von Substratbehältern bzw. Frontelementen aufwendig ist. Hierzu ist in der Regel spezielles Personal und/oder spezielles Werkzeug erforderlich.

Schließlich tritt bei bekannten Systemen das Problem auf, dass Erde aus dem Substratbehälter durch die Bewässerungskanäle entweichen kann und die Substratbehälter somit auf Dauer zur Bepflanzung ungeeignet werden. Deshalb werden bei bekannten Systemen oftmals Textilmaterialien in Form von Textiltaschen verwendet. Bei dem Textilmaterial kann es sich beispielsweise um Vlies handeln, durch welches Wasser und Nährstoffe die Pflanzen erreichen können. Derartige Textilmaterialien weisen allerdings wesentliche Vorteile von Erde nicht auf. Dazu gehören die Wärmedämmung sowie akustische Dämmung, die von Erde gewährleistet wird.

Aufgabe der vorliegenden Erfindung ist es daher, ein System zur Verfügung zu stellen, welches die im Stand der Technik auftretenden Nachteile nicht aufweist.

Erfindungsgemäß wird diese Aufgabe durch den unabhängigen Patentanspruch 1 gelöst. Weiterbildungen sind in den abhängigen Patentansprüchen angegeben.

Demgemäß wird ein modulares System für eine lebende Wand vorgeschlagen, wobei das System ein Frontelement mit mindestens einem Substratbehälter aufweist. Weiterhin weist das System ein Rückelement mit mindestens einer integrierten Bewässerungsleitung auf, wobei das Rückelement mit dem Frontelement verbindbar ist. Schließlich ist zwischen dem Frontelement und dem Rückelement eine Zwischenschicht vorgesehen, welche für Substrat undurchlässig ist.

Die Vorteile der vorliegenden Erfindung liegen auf der Hand. Durch die integrierte Bewässerungsleitung des Rückelements wird gewährleistet, dass eine Bewässerung "von oben" nicht mehr notwendig ist. Die Bewässerung kann vielmehr für jedes Modul, bestehend aus Frontelement, Rückelement und Zwischenschicht, separat durchgeführt werden.

Somit ist ein Modifizieren der lebenden Wand deutlich vereinfacht, da ein einzelnes Modul zur lebenden Wand hinzugefügt oder entfernt werden kann, ohne dass die Bewässerung insgesamt verändert werden muss. In diesem Fall wird lediglich die Bewässerung des einzelnen Moduls hinzugefügt oder entfernt. Dies ist durch die im Rückelement integrierte Bewässerungsleitung leicht möglich.

An die im Rückelement integrierte Bewässerungsleitung kann in diesem Fall eine bereits vorhandene Bewässerung bzw. ein Wasseranschluss angeschlossen werden oder die im Rückelement integrierte Bewässerungsleitung kann von einer bereits vorhandenen Bewässerung bzw. einem Wasseranschluss abgetrennt werden. Hierdurch ist ein modularer Aufbau des erfindungsgemäßen Systems ermöglicht.

Darüber hinaus wird durch die erfindungsgemäße Zwischenschicht verhindert, dass Substrat, insbesondere Erde, aus dem Frontelement mit mindestens einem Substratbehälter entweichen kann.

Die Zwischenschicht ist hierzu zwischen dem Frontelement und dem Rückelement angeordnet. Somit wird synergistisch zum einen gewährleistet, dass durch das Rückelement eine Bewässerung des Substratbehälters gewährleistet wird und zum anderen Substrat nicht aus dem Substratbehälter entweichen kann.

Das Material der Zwischenschicht ist ein Material, welches resistent gegenüber Wasserschäden ist.

Insgesamt wird hierdurch ein System zur Verfügung gestellt, das modular verwendet werden kann, wobei ein modulares Anschließen oder Entfernen des Moduls an ein vorhandenes Bewässerungssystem ermöglicht wird.

Durch das Vorsehen der Zwischenschicht wird außerdem ermöglicht, dass im Substratbehälter Erde als Substrat verwendet wird. Erde weist die Vorteile auf, dass eine thermische Dämmung sowie eine akustische Dämmung des Moduls optimiert werden.

Alternativ kann auch ein Textilmaterial, wie zum Beispiel Vlies, im Substratbehälter verwendet werden, um das Gewicht des Moduls zu reduzieren.

Gemäß einem Aspekt der Erfindung ist vorgesehen, dass das Rückelement Einschnitte und/oder Faltungen und/oder Befestigungsöffnungen aufweist, sodass das Rückelement an einer Tragestruktur für architektonische Standardelemente befestigt werden kann. Eine derartige Befestigung wird vorteilhafterweise mittels Schrauben und/oder Nieten und/oder Haken und/oder Ösen vorgenommen.

Architektonische Standardelemente sind hierbei Elemente, die zur Verkleidung einer Gebäudefassade verwendet werden. Hierbei handelt es sich vorzugsweise um rechteckige Verkleidungselemente, die auf einer Trägerstruktur angeordnet werden können. Bei der Trägerstruktur handelt es sich beispielsweise um ein Gestänge, Gitter oder Gerüst, das einem Gebäude zugeordnet ist.

Die architektonischen Standardelemente sind dabei ausgelegt, große Gebäudefassaden kostengünstig zu bedecken. Dies wird insbesondere in der gewerblichen Architektur eingesetzt.

Die erfindungsgemäßen Module des modularen Systems können somit anstelle von oder zusätzlich zu architektonischen Standardelementen zur Verkleidung von Gebäudefassaden verwendet werden.

Somit sind keine architektonischen Änderungen an bekannten Trägerstrukturen notwendig, und die erfindungsgemäßen Module können zur Verkleidung an bereits bekannten und vorhandenen Trägerstrukturen verwendet werden.

Natürlich ist auch denkbar, die erfindungsgemäßen Module des modularen Systems zur Verkleidung jeglicher Wände, z.B. in Einkaufspassagen oder Wohnhäusern, zu verwenden.

Gemäß einem weiteren Aspekt der Erfindung ist die Zwischenschicht undurchlässig für Pflanzen, insbesondere Pflanzenwurzeln und noch bevorzugter Pflanzenbestandteilen.

Hierdurch wird verhindert das Pflanzenbestandteile, die im Substratbehälter im Substrat eingepflanzt sind, aus dem Substratbehälter bzw. dem Frontelement entweichen können.

Somit wird durch die Zwischenschicht zum einen verhindert, dass Substrat aus dem Substratbehälter entweichen kann. Zum anderen wird verhindert, dass Pflanzen aus dem Substratbehälter entweichen können.

Gemäß einem weiteren Aspekt der Erfindung ist vorgesehen, dass die Zwischenschicht durchlässig für Wasser ist oder Kanäle und/oder Löcher aufweist. Die Kanäle bzw. die Löcher sind ausgelegt, dass Wasser durch diese gelangen kann oder Wasserleitungen durch diese verlaufen können.

Die Zwischenschicht ist somit neben ihrer Dichtungsfunktion gegenüber Substrat und Pflanzen zur Weiterleitung von Wasser und/oder Nährstoffen ausgelegt.

Gemäß einem weiteren Aspekt der Erfindung weisen das Rückelement, das Frontelement und vorzugsweise die Zwischenschicht Löcher auf, wodurch diese miteinander verbindbar sind. Die Verbindung erfolgt vorzugsweise mittels Schrauben und oder Nieten.

Hierdurch lassen sich auf einfache Weise modulare Elemente herstellen, die auch als Modul oder modulares System bezeichnet werden. Die Module können zu Fassadenelementen zusammengesetzt werden bzw. an einer Gebäudefassade nebeneinander an Trägerstrukturen befestigt werden, so dass eine Gebäudefassade durch die Module flächig bedeckt wird.

Gemäß einem weiteren Aspekt der Erfindung ist das System derart ausgelegt und dimensioniert, dass es wie architektonische Standardelemente an einer Oberfläche befestigbar ist.

Hierdurch kann eine flächige Bedeckung einer Gebäudefassade durch die Module erreicht werden, ohne dass die Gebäudefassade verändert werden muss. Insbesondere kann eine Trägerstruktur, die zur Befestigung von architektonischen Standardelementen ausgelegt ist, zur Befestigung der Module verwendet werden.

Gemäß einem weiteren Aspekt der Erfindung sind das Frontelement und/oder das Rückelement und/oder die Zwischenschicht leichtgewichtig. Das Frontelement und/oder das Rückelement bestehen aus Aluminium.

Hierdurch wird das gesamte Gewicht des Moduls reduziert, so dass dieses einfach zu handhaben ist und die Trageeigenschaften einer Trägerstruktur, an der die Module befestigt werden, nicht abgeändert werden muss, um die Module tragen zu können.

Gemäß einem weiteren Aspekt der Erfindung kann das Frontelement verschiedene Formen annehmen, wobei Frontelemente verschiedener Form mit anderen Frontelementen modular an einer Oberfläche befestigbar sind.

Hierdurch wird gewährleistet, dass eine Gebäudefassade optisch ansprechend gestaltet werden kann, indem Frontelemente verschiedener Form verwendet werden. Alternativ oder zusätzlich ist denkbar, dass die Frontelemente verschiedene Farbgebung aufweisen können.

Die Frontelemente sind allerdings weiterhin modular aufgebaut, so dass die Verbindung aus Frontelement, Rückelement und Zwischenschicht weiterhin zu einem Modul führt, welches zur Bedeckung einer Gebäudefassade verwendet werden kann und welches mit anderen Modulen kombiniert werden kann, auch wenn diese anderen Module Frontelemente anderer Form aufweisen.

Gemäß einem weiteren Aspekt der Erfindung ist das System derart ausgelegt und dimensioniert, dass es gleich architektonischen Standardelementen schnell abbaubar ist.

Somit kann nicht nur die Installation bzw. der Aufbau bzw. die Bedeckung einer Gebäudefassade mit den erfindungsgemäßen Modulen vereinfacht werden, sondern auch der Abbau der Module vereinfacht werden. Die Module können somit schnell, beispielsweise zur Neubepflanzung und/oder Wartung, abgenommen werden.

Außerdem wird durch die in dem Rückelement integrierte Bewässerungsleitung in diesem Fall gewährleistet, dass nicht die Bewässerung der gesamten Gebäudefassade bzw. der gesamten lebenden Wand abgeschaltet oder modifiziert werden muss, wenn ein einzelnes Modul abgebaut wird. Lediglich das Einzelmodul muss von dem Bewässerungssystem abgetrennt werden, was durch die integrierte Bewässerungsleitung im Rückelement einfach bewerkstelligt werden kann.

Gemäß einem weiteren Aspekt der Erfindung ist vorgesehen, dass der Substratbehälter ausgebildet ist, Substrat, vorzugsweise Erde, und/oder Pflanzen aufzunehmen.

Hierdurch kann der Substratbehälter optimal zur Bestückung mit Pflanzen verwendet werden und eine lebende Wand ausgebildet werden. Die Bepflanzung mit Erde führt zu einer optimierten thermischen Dämmwirkung sowie einer optimierten akustischen Dämmwirkung des erfindungsgemäßen Systems.

Hierdurch wird erreicht, dass ein Gebäudeinneres bezüglich der Außenumgebung thermisch und akustisch gedämmt wird.

Gemäß einem weiteren Aspekt der Erfindung ist die integrierte Bewässerungsleitung im Rückelement eingeprägt.

Hierbei wird durch Umformen mindestens eine Bewässerungsleitung im Rückelement erzeugt. Hierdurch kann auf einfache und kostengünstige Weise eine gerichtete Leitung von Wasser im Rückelement erreicht werden.

Gemäß einem weiteren Aspekt der Erfindung weist das System, vorzugsweise im Rückelement, Anschlüsse auf zur Befestigung von Wasserleitungen an das System, vorzugsweise an das Rückelement. Die Anschlüsse sind ausgelegt, Wasser und/oder Nährstoffe zu dem Substratbehälter zu überführen.

Durch die Anschlüsse kann das Modul, genauer das Rückelement des Moduls, an ein vorhandenes Bewässerungssystem bzw. eine Wasserversorgung angeschlossen werden. Das Wasser und/oder die Nährstoffe können anschließend im System genutzt werden, vorzugsweise indem der Substratbehälter mit Wasserund/oder Nährstoffen versorgt wird.

Hierzu ist beispielhaft vorgesehen, dass Wasser und/oder Nährstoffe über die Anschlüsse im Rückelement in die im Rückelement integrierte Wasserleitung gelangen kann. Dieses Wasser bzw. diese Nährstoffe gelangen von der integrierten Wasserleitung über Löcher im Rückelement zur Zwischenschicht, über Löcher in der Zwischenschicht zum Frontelement. Die Löcher sowohl im Rückelement als auch in der Zwischenschicht sind so angeordnet, dass das Wasser bzw. die Nährstoffe das Frontelement genau an den Stellen erreichen, an denen die Substratbehälter angeordnet sind. Somit können die Substratbehälter, die vorzugsweise integral mit dem Frontelement ausgebildet sind, mit Wasser und/oder Nährstoffen versorgt werden.

Gemäß einem weiteren Aspekt der Erfindung beträgt das Verhältnis von Gewicht des Moduls zur Oberfläche des Moduls, gesehen bezüglich dem Frontelement des Moduls, 10 bis 30 kg/m², bevorzugt 15 bis 25 kg/m², und noch bevorzugter 20 kg/m².

Durch dieses niedrige Gewicht des Moduls wird die Installation und/oder der Abbau des Moduls erleichtert. Außerdem kann eine leichte lebende Wand erzeugt werden und eine Gebäudefassade kann somit leicht ausgelegt werden. Außerdem muss eine die Module tragende Trägerstruktur kein hohes Gewicht tragen, was insbesondere dann von Vorteil ist, wenn eine für gewöhnliche architektonische Standardelemente vorgesehene Trägerstruktur verwendet wird.

Hierbei ist zu beachten, dass die Oberfläche einzelner Module, d.h. die Frontelemente einzelner Module, 0,5 m² bis 1,5 m² beträgt, vorzugsweise 0,75 m² bis 1,25 m².

Gemäß einem weiteren Aspekt der Erfindung ist das System bezüglich der Ausdehnung und dem Gewicht so ausgelegt und dimensioniert, dass das System von einer einzigen Person installierbar und/oder abbaubar ist.

Hierdurch können die Kosten sowie der Aufwand zur Installation bzw. zum Abbau der Module reduziert werden.

Gemäß einem weiteren Aspekt der Erfindung sind im Frontelement und/oder in der Zwischenschicht keine Wasserleitungen angeordnet.

Hierdurch wird der strukturelle Aufbau des Moduls vereinfacht und die Anzahl der Komponenten des Moduls reduziert, wodurch Kosten eingespart werden können sowie die Wartungsintervalle und die Fehleranfälligkeit reduziert werden kann.

Von dem Rückelement kann in diesem Fall Wasser und/oder Nährstoffe durch die Zwischenschicht in den Substratbehälter gelangen, ohne dass hierfür dezidierte Leitungen vorgesehen sind. Vielmehr erfolgt die Leitung von Wasser und/oder Nährstoffen beispielsweise durch Kapillarwirkung durch die Zwischenschicht. Nachfolgend wird die Erfindung unter Bezugnahme auf die beiliegenden Zeichnungen anhand exemplarischer Ausführungsformen des erfindungsgemäßen Systems näher beschrieben.

In den Zeichnungen zeigen:
- FIG. 1:: ein Frontelement des erfindungsgemäßen modularen Systems für eine lebende Wand gemäß einer Ausführungsform der Erfindung;
- FIG. 2:: ein Frontelement des erfindungsgemäßen modularen Systems für eine lebende Wand gemäß einer zweiten Ausführungsform der Erfindung;
- FIG. 3:: eine Trägerstruktur für das erfindungsgemäße System;
- FIG. 4:: eine modulare Anordnung mehrerer Module des erfindungsgemäßen Systems;
- FIG. 5:: eine Zwischenschicht des erfindungsgemäßen Systems mit Löchern zur Befestigung der Zwischenschicht;
- FIG. 6:: ein Rückelement des erfindungsgemäßen Systems mit integrierter Bewässerungsleitung sowie Befestigungselementen zur Befestigung an einer Trägerstruktur; und
- FIG. 7:: das Frontelement, die Zwischenschicht sowie das Rückelement des erfindungsgemäßen Systems.

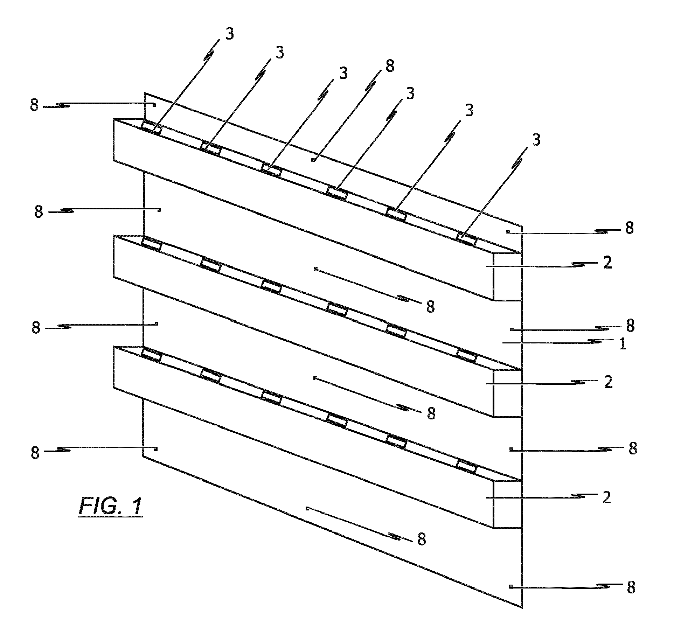

FIG. 1 zeigt ein Frontelement 1 des erfindungsgemäßen modularen Systems für eine lebende Wand. Das Frontelement 1 weist mehrere Substratbehälter 2 auf.

Die Substratbehälter 2 sind in einem sichtseitigen Bereich des Frontelements 1 angeordnet und weisen Öffnungen 3 auf, die ausgelegt sind, dass Substrat in die Substratbehälter 2 eingeführt werden kann sowie Pflanzen in den Öffnungen 3 eingepflanzt werden können.

Die Substratbehälter 2 können länglich ausgebildet sein und mehrere Öffnungen 3 aufweisen.

Als Substrat in dem Substratbehälter 2 kann Erde zum Einsatz kommen. Auch können Textilmaterialien wie zum Beispiel Vlies zum Einsatz kommen.

Das Frontelement 1 ist vorzugsweise aus Aluminium gebildet, um das Gewicht des Frontelements zu reduzieren.

Die Substratbehälter 2 sind vorzugsweise integral zusammen mit dem Frontelement 1 aus Aluminium gebildet.

Alternativ können die Substratbehälter 2 auch separat ausgebildet sein und mit dem Frontelement 1 verbunden sein. Auch können die Substratbehälter 2 aus einem Textilmaterial gebildet sein und beispielsweise Textiltaschen zur Aufnahme von Substrat und/oder Pflanzen aufweisen.

Schließlich zeigt FIG. 1 Löcher 8 zur Befestigung des Frontelements oder zur Bewässerung der Substratbehälter 2.

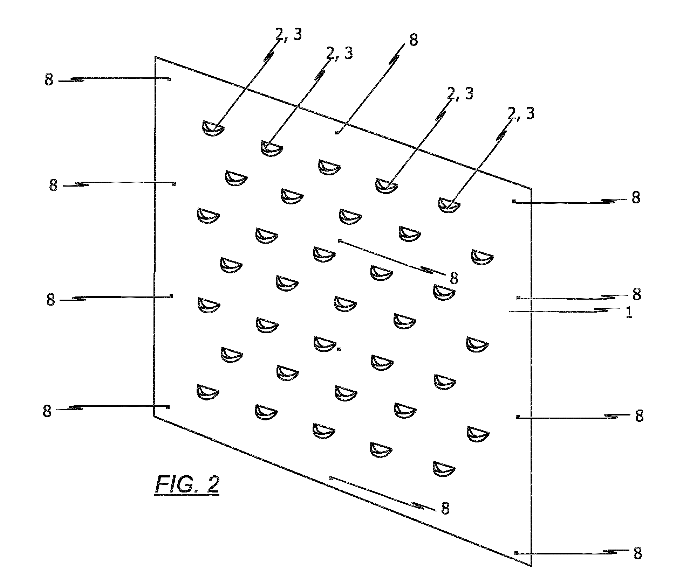

FIG. 2 zeigt eine alternative Ausführung des Frontelements 1. Hierbei sind die Substratbehälter 2 von anderer Formgebung, wobei jeder Substratbehälter 2 eine einzige Öffnung 3 aufweist.

Wiederum können die Substratbehälter 2 integral mit dem Frontelement 1 verbunden sein oder separat vom Frontelement 1 zur Verfügung gestellt werden. Auch können die Substratbehälter 2 aus Aluminium oder aus einem Textilmaterial bestehen.

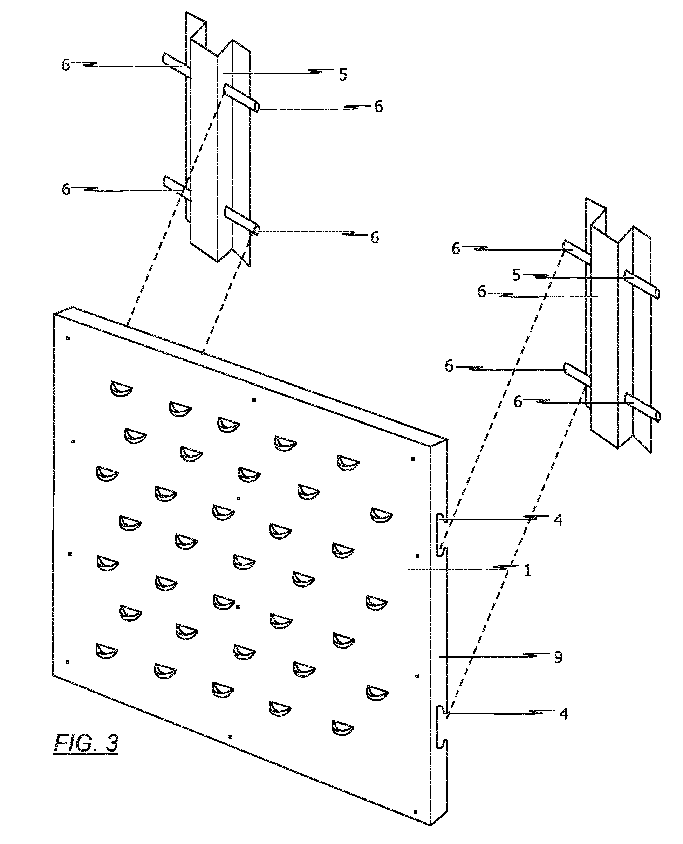

FIG. 3 zeigt ein erfindungsgemäßes Modul, bestehend aus Frontelement 1 und (nicht gezeigter) Zwischenschicht 7 sowie Rückelement 9 mit Befestigungen 4. Die Befestigungen 4 sind in FIG. 3 beispielsweise als Einschnitte ausgeführt.

Weiterhin ist in FIG. 3 eine Trägerstruktur 5 gezeigt, die zur Befestigung des modularen Systems an eine Gebäudefassade vorgesehen ist.

Die Einschnitte können in entsprechend komplementär ausgebildete Befestigungsstäbe 6 der Trägerstruktur 5 eingehängt werden.

Natürlich ist denkbar, dass das Modul an die Trägerstruktur 5 mit anderen Befestigungsmitteln befestigt wird, beispielsweise mit Schrauben und/oder Nieten und/oder Haken und/oder Ösen.

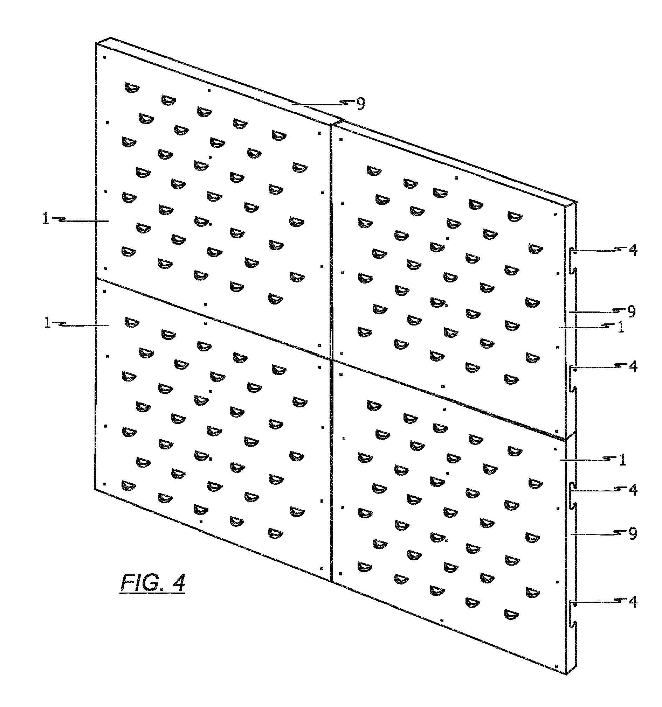

FIG. 4 zeigt die modulare Anordnung von mehreren Modulen, bestehend aus Frontelement 1, Zwischenschicht 7 (nicht gezeigt) und Rückelement 9, an einer Gebäudefassade. Die Gebäudefassade kann vorzugsweise vollständig mit Modulen bedeckt werden.

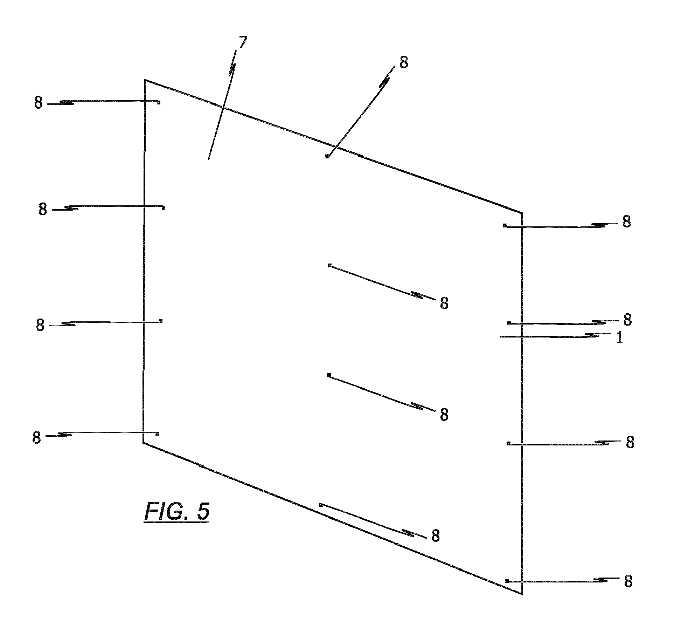

FIG. 5 zeigt die Zwischenschicht 7 sowie in der Zwischenschicht 7 vorgesehene Löcher 8.

Die Löcher 8 sind zur Befestigung der Zwischenschicht 7 zwischen einem Frontelement 1 und einem Rückelement 9 vorgesehen.

Außerdem bzw. zusätzlich können die Löcher 8 zur Zuführung von Wasser von dem Rückelement 9 zum Frontelement 1, genauer zu den Substratbehältern 2, dienen.

Hierzu können Wasserleitungen in den Löchern 8 vorgesehen sein. Alternativ kann Wasser frei durch die Löcher 8 strömen. Auch kann die Zwischenschicht 7 frei von Löchern zur Wasserleitung sein und Wasser kann in diesem Fall durch die Zwischenschicht 7 sickern.

Die Zwischenschicht 7 kann aus einem Textilgewebe oder einem Kunststoff bestehen und sorgt für strukturelle Stabilität des Moduls sowie einer Dichtung der Substratbehälter 2 nach hinten, d.h. in Richtung des Rückelements 9.

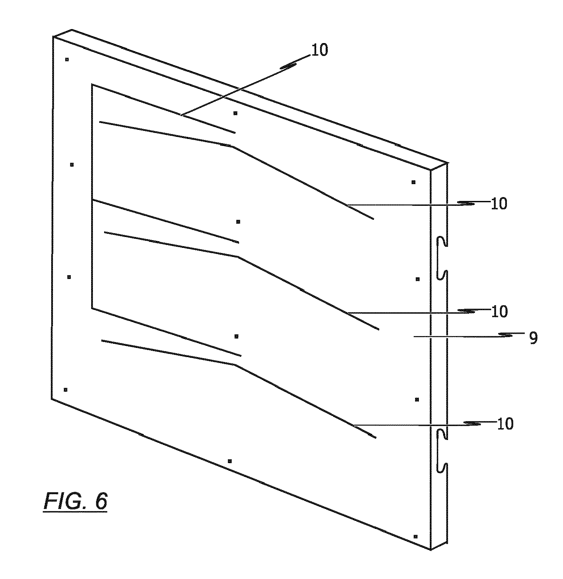

FIG. 6 zeigt ein Rückelement 9, wobei das Rückelement 9 mindestens eine integrierte Bewässerungsleitung 10 aufweist. Die Bewässerungsleitung 10 kann in das Rückelement 9 eingeprägt sein.

Weiterhin weist das Rückelement Befestigungen 4 auf, welche zur Befestigung des erfindungsgemäßen Moduls an einer Trägerstruktur 5 vorgesehen sind. Die Befestigung kann, wie in FIG. 6 gezeigt, durch Einhängen realisiert sein. Denkbar ist auch eine Befestigung durch Schrauben oder Nieten.

Ein externer Wasseranschluss kann an die Bewässerungsleitung 10 angeschlossen werden, wobei hierzu im Rückbereich des Rückelements 9 mindestens ein Anschluss (nicht gezeigt) vorgesehen ist.

Der Anschluss kann so ausgebildet sein, dass ein modulares Installieren oder Entfernen des erfindungsgemäßen Moduls optimiert wird, da eine externe Wasserversorgung schnell und einfach mit der integrierten Bewässerungsleitung 10 verbindbar ist.

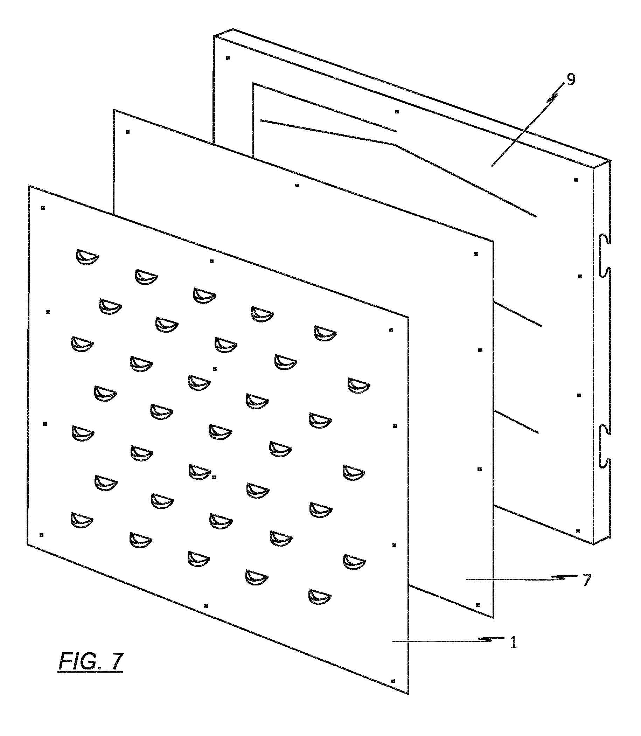

FIG. 7 zeigt das Frontelement 1, die Zwischenschicht 7 sowie das Rückelement 9.

Das Frontelement 1, die Zwischenschicht 7 sowie das Rückelement 9 werden vorzugsweise miteinander verbunden, um das erfindungsgemäßes Modul zu schaffen.

Hierzu können Schrauben und/oder Nieten durch entsprechende Löcher 8 in dem Frontelement 1, der Zwischenschicht 7 sowie dem Rückelement 9 zum Einsatz kommen.

Das erfindungsgemäße System ist nicht auf die in den Figuren gezeigten Ausführungsformen beschränkt sondern ergibt sich aus einer Zusammenschau sämtlicher hier offenbar Merkmale.

### Bezugszeichenliste

- 1: Frontelement
- 2: Substratbehälter
- 3: Öffnung
- 4: Befestigung
- 5: Trägerstruktur
- 6: Befestigungsstäbe
- 7: Zwischenschicht
- 8: Löcher
- 9: Rückelement
- 10: integrierte Bewässerungsleitung

## Patentansprüche

1. Modulares System für eine lebende Wand, wobei das System folgendes aufweist:
• ein Frontelement (1) mit mindestens einem Substratbehälter (2);
• ein Rückelement (9) mit mindestens einer integrierten Bewässerungsleitung (10), wobei das Rückelement (9) mit dem Frontelement (1) verbindbar ist; und
• eine Zwischenschicht (7), welche zwischen dem Frontelement (1) und dem Rückelement (9) angeordnet ist, und welche für Substrat, insbesondere Erde, im Wesentlichen undurchlässig ist.

2. System nach Anspruch 1,
wobei das Rückelement (9) Einschnitte (4) und/oder Faltungen (4) und/oder Befestigungsöffnungen (4) aufweist zur Befestigung des Rückelements (9) an einer Trägerstruktur (5) für architektonische Standardelemente, vorzugsweise mittels Schrauben (6) und/oder Nieten (6) und/oder Haken (6) und/oder Ösen (6) und/oder Stäben (6).

3. System nach Anspruch 1 oder 2,
wobei die Zwischenschicht (7) undurchlässig für Pflanzen, insbesondere Pflanzenwurzeln, noch bevorzugter für Pflanzenbestandteile, ist.

4. System nach einem der Ansprüche 1 bis 3,
wobei die Zwischenschicht (7) durchlässig für Wasser ist oder Kanäle (8) und/oder Löcher (8) aufweist, die ausgelegt sind, durchlässig für Wasser oder Wasserleitungen zu sein.

5. System nach einem der Ansprüche 1 bis 4,
wobei das Frontelement (1) und das Rückelement (9) und vorzugsweise die Zwischenschicht (7) Löcher (8) aufweisen derart, dass sie miteinander verbindbar sind, vorzugsweise mit Schrauben und/oder Nieten.

6. System nach einem der Ansprüche 1 bis 5
wobei das System derart ausgelegt und dimensioniert ist, dass es wie architektonische Standardelemente an einer Trägerstruktur (5) einer Oberfläche befestigbar ist.

7. System nach einem der Ansprüche 1 bis 6,
wobei das Frontelement (1) und/oder das Rückelement (9) und/oder die Zwischenschicht (7) leichtgewichtig sind, wobei das Frontelement (1) und/oder das Rückelement (9) aus Aluminium bestehen.

8. System nach einem der Ansprüche 1 bis 7,
wobei das Frontelement (1) verschiedene Formen annehmen kann, wobei Frontelemente (1) verschiedener Form mit anderen Frontelementen (1) modular an einer Trägerstruktur (5) einer Oberfläche befestigbar sind.

9. System nach einem der Ansprüche 1 bis 8,
wobei das System derart ausgelegt und dimensioniert ist, dass es wie architektonische Standardelemente schnell abbaubar ist.

10. System nach einem der Ansprüche 1 bis 9,
wobei der Substratbehälter (2) ausgebildet ist, Substrat, vorzugsweise Erde, und/oder Pflanzen aufzunehmen.

11. System nach einem der Ansprüche 1 bis 10,
wobei die integrierte Bewässerungsleitung (10) im Rückelement (9) eingeprägt ist.

12. System nach einem der Ansprüche 1 bis 11,
wobei das System, vorzugsweise das Rückelement (9) des Systems, Anschlüsse aufweist zur Befestigung von Wasserleitungen an das System, vorzugsweise an das Rückelement (9) des Systems, welche ausgelegt sind, Wasser und/oder Nährstoffe zu dem Substratbehälter (2) zu überführen.

13. System nach einem der Ansprüche 1 bis 12,
wobei das System ein Verhältnis von Gewicht zu Oberfläche von 10 bis 30 kg/m², vorzugsweise 15 bis 25 kg/m², und noch bevorzugter 20 kg/m² aufweist.

14. System nach einem der Ansprüche 1 bis 13,
wobei das System, bezüglich der Ausdehnung und dem Gewicht, so ausgelegt und dimensioniert ist, dass das System von einer einzigen Person installierbar und/oder abbaubar ist.

15. System nach einem der Ansprüche 1 bis 14,
wobei im Frontelement (1) und/oder in der Zwischenschicht (7) keine Wasserleitungen angeordnet sind.
